# EUROPÄISCHE PATENTSCHRIFT

(11) **EP 2 563 892 B1**
(45) Veröffentlichungstag und Bekanntmachung des Hinweises auf die Patenterteilung: **06.07.2016**
(21) Anmeldenummer: 11716542.3
(22) Anmeldetag: 27.04.2011
(51) Int. Cl.: C11D 3/02, C11D 3/39, C11D 17/00, C01B 15/10

(54) **BLEICHMITTELPARTIKEL UMFASSEND NATRIUMPERCARBONAT UND EINEN BLEICHAKTIVATOR**
BLEACHING AGENT PARTICLES COMPRISING SODIUM PERCARBONATE AND A BLEACH ACTIVATOR
PARTICULES D'AGENT DE BLANCHIMENT COMPRENANT DU PERCARBONATE DE SODIUM ET UN ACTIVATEUR DE BLANCHIMENT

(30) Priorität: 27.04.2010 DE 102010028236
(43) Veröffentlichungstag der Anmeldung: 06.03.2013
(73) Patentinhaber: Evonik Treibacher GmbH, 9330 Althofen (AT)
(72) Erfinder: LEININGER, Stefan, 63505 Langenselbold (DE); JAKOB, Harald, 63594 Hasselroth (DE); OVERDICK, Ralph, 65719 Hofheim (DE)
(74) Vertreter: Schwarz & Partner
(86) Internationale Anmeldenummer: PCT/EP2011/056607
(87) Internationale Veröffentlichungsnummer: WO 2011/134972

(56) Entgegenhaltungen:
- EP-A2- 0 737 738
- WO-A1-00/71666
- US-A- 5 458 801

## Beschreibung

Gegenstand der Erfindung sind Bleichmittelpartikel, die Natriumpercarbonat und einen Bleichaktivator enthalten und eine hohe Lagerstabilität aufweisen.

Natriumpercarbonat wird in Reinigungsmitteln und Waschmitteln als Bleichmittel eingesetzt. Bei der Anwendung des Reinigungsmittels wird aus dem Natriumpercarbonat als bleichwirksamer Bestandteil Wasserstoffperoxid freigesetzt. Um die bleichende Wirkung bei niedrigen Temperaturen zu verstärken, werden in Reinigungsmitteln meist Bleichsysteme verwendet, bei denen Natriumpercarbonat zusammen mit einem Bleichaktivator eingesetzt wird. Als Bleichaktivatoren werden dazu meist N-Acylverbindungen und O-Acylverbindungen eingesetzt, die eine oder mehrere perhydrolysefähige an Stickstoff oder an Sauerstoff gebundene Acylgruppen enthalten, die mit dem aus dem Natriumpercarbonat freigesetzten Wasserstoffperoxid in einer wässrigen Reinigungsmittellösung zu einer Peroxycarbonsäure reagieren. Neben der Perhydrolyse tritt insbesondere in alkalischen Reinigungsmittellösungen auch eine Hydrolyse auf, bei der an Stelle der Peroxycarbonsäure die entsprechende Carbonsäure gebildet wird.

Sowohl Natriumpercarbonat als auch die als Bleichaktivatoren eingesetzten N-Acylverbindungen und O-Acylverbindungen sind feuchtigkeitsempfindlich und zersetzen sich in einer Reinigungsmittelzubereitung bei Einwirkung von Feuchtigkeit. Deshalb werden Natriumpercarbonat und perhydrolysefähige Bleichaktivatoren in Reinigungsmitteln üblicherweise getrennt in Form von jeweils umhüllten Partikeln eingesetzt, bei denen die Umhüllung eine Einwirkung von Feuchtigkeit verhindern soll.

Da Natriumpercarbonat und die als Bleichaktivatoren eingesetzten N-Acylverbindungen und O-Acylverbindungen sehr unterschiedliche Dichten und Schüttgewichte aufweisen, kann es in Reinigungsmitteln, die Natriumpercarbonatpartikel und Bleichaktivatorpartikel enthalten, sowohl während der Herstellung des Reinigungsmittels als auch im verpackten Reinigungsmittel während des Transports und des Gebrauchs zu einer Segregation der Partikel von Natriumpercarbonat und Bleichaktivator kommen. Dies hat dann zur Folge, dass bei der Anwendung des Reinigungsmittels nicht mehr das für die Bleichaktivierung gewünschte Mengenverhältnis von Bleichmittel und Bleichaktivator vorliegt. Zur Gewährleistung einer ausreichenden Bleichwirkung wird dann ein höherer Gehalt an Bleichmittel und Bleichaktivator im Reinigungsmittel erforderlich. Um eine Segregation von Natriumpercarbonat und Bleichaktivator zu vermeiden und um bei der Anwendung Verluste an Bleichaktivator durch Hydrolyse zu vermeiden wäre es deshalb wünschenswert, Natriumpercarbonat und Bleichaktivator in Form von Partikeln dem Reinigungsmittel zuzusetzen, die sowohl Natriumpercarbonat und Bleichaktivator enthalten. Bei solchen Partikeln besteht allerdings das Problem, eine vorzeitige Reaktion von Natriumpercarbonat mit dem Bleichaktivator im Partikel zu vermeiden.

US 5,458,801 beschreibt Partikel, die auf einem mit einem Borat umhüllten Natriumpercarbonatkern eine Hüllschicht aus einem Bleichaktivator und einem wasserlöslichen organischen Bindemittel aufweisen. Diese Partikel werden hergestellt durch Granulieren der mit einem Borat umhüllten Natriumpercarbonatpartikel mit pulverförmigem Bleichaktivator und geschmolzenem Bindemittel. Die Granulation erfolgt in einem Mischergranulator unter Einsatz eines Zerhackers. Auf die erhaltenen Partikel kann eine zusätzliche Hüllschicht aus einer wasserlöslichen hochmolekularen Substanz aufgebracht werden, wobei diese Hüllschicht durch Aufsprühen einer wässrigen Lösung der hochmolekularen Substanz in einer Wirbelschicht aufgebracht werden kann.

WO 2007/127641 beschreibt Natriumpercarbonat und einen Bleichaktivator enthaltende Cogranulate, die hergestellt werden, indem zuerst Natriumpercarbonat oder ein Bleichaktivator mit einem geschmolzenen Bindemittel granuliert werden und danach mit der anderen Komponente das Cogranulat hergestellt wird.
Die aus dem Stand der Technik bekannten Bleichmittelpartikel, die Natriumpercarbonat und einen Bleichaktivator enthalten, haben jedoch den Nachteil, dass sie auf Grund einer Zersetzung von Natriumpercarbonat oder einer Reaktion von Natriumpercarbonat mit dem Bleichaktivator bei der Lagerung eine Selbsterwärmung zeigen, die so hoch ist, dass sie aus Sicherheitsgründen nicht in einem Silo gelagert werden dürfen. Darüber hinaus haben diese aus dem Stand der Technik bekannten Bleichmittelpartikel auch den Nachteil, dass sie bei der Lagerung zur Verbackung neigen, was ebenfalls einer Silolagerung entgegensteht.
Es wurde nun gefunden, dass sich bei Bleichmittelpartikeln mit einem Natriumpercarbonatkern und einer den Bleichaktivator enthaltenden Hüllschicht durch eine dazwischen liegende Hüllschicht geeigneter Zusammensetzung eine verbesserte Lagerstabilität erreichen lässt, die eine Lagerung in Silos ermöglicht.
Gegenstand der Erfindung sind deshalb Bleichmittelpartikel, umfassend einen Kern, der im Wesentlichen aus Natriumpercarbonat besteht, eine innere Hüllschicht, die mindestens 50 Gew.-% Natriumsulfat in Form von Thenardit oder Burkeit enthält, und eine äußere Hüllschicht, enthaltend ein wasserlösliches Bindemittel und mindestens einen Bleichaktivator ausgewählt aus perhydrolysierbaren N-Acylverbindungen und O-Acylverbindungen.
Gegenstand der Erfindung sind außerdem Reinigungsmittel, die solche Bleichmittelpartikel enthalten, sowie ein Verfahren zur Herstellung solcher Bleichmittelpartikel, das einen ersten Schritt des Aufsprühens einer Natriumsulfat enthaltenden wässrigen Lösung auf im wesentlichen aus Natriumpercarbonat bestehende Partikel unter gleichzeitigem Verdampfen von Wasser und einen zweiten Schritt des Aufbringens einer wässrigen Lösung oder Dispersion eines wasserlöslichen Bindemittels und von Partikeln eines Bleichaktivators, ausgewählt aus perhydrolysierbaren N-Acylverbindungen und O-Acylverbindungen, auf die im ersten Schritt gebildeten umhüllten Partikel umfasst.

Die erfindungsgemäßen Bleichmittelpartikel umfassen einen Kern, der im Wesentlichen aus Natriumpercarbonat, d.h. Natriumcarbonat-Perhydrat der Zusammensetzung 2 Na₂CO₃ · 3 H₂O₂ besteht. Der Kern kann neben Natriumpercarbonat noch Natriumcarbonat, Natriumhydrogencarbonat und deren Mischsalze, sowie geringe Mengen an bekannten Stabilisatoren für Persauerstoffverbindungen, wie zum Beispiel Magnesiumsalze, Silikate, Phosphate und/oder Chelatkomplexbildner enthalten. Der Anteil von Natriumpercarbonat im Kern der erfindungsgemäßen Bleichmittelpartikel beträgt vorzugsweise mehr als 70 Gew.-% und besonders bevorzugt mehr als 85 Gew.-%, bezogen auf die Masse des Kerns. Der Anteil an organischen Kohlenstoffverbindungen im Kern beträgt vorzugsweise weniger als 1 Gew.-%, besonders bevorzugt weniger als 0,1 Gew.-%, bezogen auf die Masse des Kerns.

In einer bevorzugten Ausführungsform enthält der Kern geringe Mengen an Additiven, die auf den Aktivsauerstoffgehalt stabilisierend wirken, wobei der Anteil an stabilisierenden Additiven im Kern vorzugsweise weniger als 2 Gew.-% bezogen auf die Masse des Kerns beträgt. Als stabilitätserhöhende Additive werden vorzugsweise Magnesiumsalze, Wasserglas, Stannate, Pyrophosphate, Polyphosphate sowie Chelatkomplexbildner aus der Reihe der Hydroxycarbonsäuren, Aminocarbonsäuren, Aminophosphonsäuren, Phosphonocarbonsäuren und Hydroxyphosphonsäuren sowie deren Alkalimetall-, Ammonium- oder Magnesiumsalze verwendet. In einer besonders bevorzugten Ausführungsform enthält der Kern als stabilisierendes Additiv ein Alkalimetallsilikat, vorzugsweise Wasserglas mit einem SiO₂/Na₂O-Modul im Bereich von 1 bis 3, in einer Menge von 0,1 bis 1 Gew.-% bezogen auf die Masse des Kerns. In der am meisten bevorzugten Ausführungsform enthält der Kern zusätzlich zu dieser Menge an Alkalimetallsilikat noch eine Magnesiumverbindung in einer Menge von 50 bis 2000 ppm Mg²⁺ bezogen auf die Masse des Kerns. Durch den Zusatz dieser stabilisierenden Additive lässt sich die Wärmeentwicklung durch Zersetzung des Natriumpercarbonats im Kern während der Lagerung weiter verringern.

Der Kern der erfindungsgemäßen Bleichmittelpartikel kann nach einem der bekannten Herstellverfahren für Natriumpercarbonat erzeugt wurden. Ein geeignetes Herstellungsverfahren für Natriumpercarbonat ist die Kristallisation von Natriumpercarbonat aus wässrigen Lösungen von Wasserstoffperoxid und Natriumcarbonat, wobei die Kristallisation sowohl in Gegenwart, als auch in Abwesenheit eines Aussalzungsmittels durchgeführt werden kann, wozu beispielhaft auf EP-A 0 703 190 und DE 2 744 574 verwiesen wird. Nach dem Kristallisationsverfahren in Gegenwart eines Aussalzungsmittels hergestellte Natriumpercarbonatpartikel können noch geringe Mengen des verwendeten Aussalzungsmittels, wie z.B. Natriumchlorid enthalten. Ebenfalls geeignet ist die Wirbelschicht-Aufbaugranulation durch Aufsprühen von wässriger Wasserstoffperoxidlösung und wässriger Sodalösung auf Natriumpercarbonat-Keime in einer Wirbelschicht bei gleichzeitiger Verdampfung von Wasser, beispielhaft wird auf WO 95/06615 verwiesen. Weiterhin ist auch die Umsetzung von festem Natriumcarbonat mit einer wässrigen Wasserstoffperoxidlösung und nachfolgende Trocknung ein geeignetes Herstellverfahren, beispielhaft wird auf DE 196 08 000 verwiesen.

In einer bevorzugten Ausführungsform weisen die erfindungsgemäßen Bleichmittelpartikel einen Kern aus im Wesentlichen Natriumpercarbonat auf, der durch Wirbelschichtgranulation aus wässrigen Lösungen von Wasserstoffperoxid und Natriumcarbonat erhältlich ist. Durch eine solche Wirbelschichtgranulation wird ein Kern erhalten, der sich durch einen besonders dichten, schalenförmigen Aufbau und eine glattere Oberfläche von den nach anderen Herstellverfahren erhaltenen Kernen unterscheidet. Erfindungsgemäße Bleichmittelpartikel, deren Kern durch Wirbelschicht-Aufbaugranulation hergestellt wurde, zeigen gegenüber Partikeln, deren Kern nach einem anderen Verfahren hergestellt wurde, eine nochmals wesentlich verbesserte Lagerstabilität und eine deutlich geringere Wärmeentwicklung auf.

Vorzugsweise weist der Kern einen Durchmesser im Bereich von 400 bis 1600 µm, besonders bevorzugt von 500 bis 800 µm, auf. Durch die Wahl eines Kerndurchmessers in diesem Bereich lässt sich eine Segregation der Bleichmittelpartikel in granulatfürmigen Reinigungsmitteln vermeiden und eine hohe Lagerstabilität der Bleichmittelpartikel gewährleisten.

Die erfindungsgemäßen Bleichmittelpartikel umfassen zusätzlich zum Kern noch eine innere Hüllschicht, die mindestens 50 Gew.-%, vorzugsweise mindestens 75 Gew.-%, Natriumsulfat in Form von Thenardit oder Burkeit enthält.

In einer bevorzugten Ausführungsform enthält die innere Hüllschicht Natriumsulfat und Natriumcarbonat in einem Gewichtsverhältnis von 95:5 bis 75:25. Besonders bevorzugt liegt das Gewichtsverhältnis von Natriumsulfat und Natriumcarbonat im Bereich von 95:5 bis 80:20, am meisten bevorzugt im Bereich von 90:10 bis 80:20. Der Gesamtanteil von Natriumsulfat und Natriumcarbonat an der inneren Hüllschicht beträgt dabei vorzugsweise mindestens 80 Gew.-%, vorzugsweise mindestens 90 Gew.-%. Das in der Hüllschicht enthaltene Natriumcarbonat liegt dabei vorzugsweise zu mehr als 80% in Form von Burkeit der Zusammensetzung Na₄ (SO₄) 1+n (CO₃) ₁₋ₙ vor, wobei n von 0 bis 0, 5 beträgt. Der Anteil von Burkeit relativ zu anderen in den Bleichmittelpartikeln enthaltenen Phasen, die Natriumcarbonat enthalten, lässt sich durch Rietveld-Analyse von Pulver-Röntgendiagrammen der Bleichmittelpartikel bestimmen.

In einer bevorzugten Ausführungsform enthält die innere Hüllschicht zusätzlich 0,1 bis 1 Gew.-% Natriumsilikat, besonders bevorzugt 0,2 bis 0,5 Gew.-% Natriumsilikat. Das Natriumsilikat ist vorzugsweise ein wasserlösliches Natriumsilikat, insbesondere ein Wasserglas. Durch den Zusatz geringer Mengen an Natriumsilikat lässt sich die Lagerstabilität der erfindungsgemäßen Bleichmittelpartikel weiter verbessern.

In einer weiteren bevorzugten Ausführungsform enthält die innere Hüllschicht Natriumsulfat in Form einer Hochtemperaturphase von Natriumsulfat und/oder einer Hochtemperaturphase eines Doppelsalzes der Zusammensetzung Na₄(SO₄)₁₊ₙ(CO₃)₁₋ₙ, wobei n von 0 bis 0,5 beträgt. Das Vorliegen der Hochtemperaturphasen lässt sich anhand von Pulver-Röntgendiagrammen der Bleichmittelpartikel bestimmen. Hüllschichten, die Natriumsulfat in Form einer Hochtemperaturphase enthalten, lassen sich wie in EP 1 903 098 beschrieben herstellen.

Der Gewichtsanteil der inneren Hüllschicht beträgt vorzugsweise 2 bis 25 %, besonders bevorzugt 2 bis 10 % und am meisten bevorzugt 4 bis 7 %, jeweils bezogen auf die Masse des Bleichmittelpartikels. Die innere Hüllschicht ist vorzugsweise so ausgebildet, dass sie das darunter liegende Material zu mehr als 95 %, vorzugsweise zu mehr als 98 % und insbesondere vollständig bedeckt.

Auf Grund der Zusammensetzung der inneren Hüllschicht wird eine Reaktion von Natriumpercarbonat aus dem Kern und Bleichaktivator aus der äußeren Hüllschicht wirksam verhindert und eine so geringe Wärmefreisetzung bei der Lagerung bewirkt, dass die erfindungsgemäßen Bleichmittelpartikel sicher in einem Silo gelagert werden können und auch in einem heißen und feuchten Klima sicher transportiert und gehandhabt werden können. Darüber hinaus ist die innere Hüllschicht auf Grund ihrer Zusammensetzung besonders unempfindlich gegenüber mechanischen Belastungen, sodass die hohe Lagerstabilität durch eine mechanische Belastung der Bleichmittelpartikel, wie sie bei einer pneumatischen Förderung oder bei einer Lagerung in einem hohen Silo auftritt, nicht beeinträchtigt wird und die Eigenschaft einer geringen Wärmefreisetzung bei der Lagerung erhalten bleibt.

Die erfindungsgemäßen Bleichmittelpartikel umfassen zusätzlich zum Kern und der inneren Hüllschicht noch eine äußere Hüllschicht, die ein wasserlösliches Bindemittel enthält und die mindestens einen Bleichaktivator ausgewählt aus perhydrolysierbaren N-Acylverbindungen und O-Acylverbindungen enthält. Vorzugsweise enthält die äußere Hüllschicht den Bleichaktivator in Form von diskreten Partikeln, die vorzugsweise eine massenbezogene mittlere Partikelgröße im Bereich von 0,1 bis 400 µm, besonders bevorzugt von 1 bis 200 µm, aufweisen. Durch die Anordnung des Bleichaktivators in der äußeren Hüllschicht in Form solcher Partikel lässt sich gleichzeitig eine hohe Stabilität gegen Hydrolyse während der Lagerung und eine rasche Umsetzung des Bleichaktivators zur Percarbonsäure bei der Anwendung der erfindungsgemäßen Bleichmittelpartikel erzielen.

Als Bleichaktivator eignen sich perhydrolysierbare N-Acylverbindungen und O-Acylverbindungen, die in wässrigem Medium mit Wasserstoffperoxid zu einer Peroxycarbonsäure reagieren. Geeignet sind vor allem mehrfach acylierte Alkylendiamine, insbesondere Tetraacetylethylendiamin (TAED); acylierte Triazinderivate, insbesondere 1,5-Diacetyl-2,4-dioxohexahydro-1,3,5-triazin (DADHT); acylierte Glykolurile, insbesondere Tetraacetylglykoluril (TAGU); N-Acylimide, insbesondere N-Nonanoylsuccinimid (NOSI); acylierte Phenolsulfonate, insbesondere n-Nonanoyl- oder iso-Nonanoyloxybenzolsulfonat (n- bzw. iso-NOBS); Carbonsäureanhydride, wie Phthalsäureanhydrid; acylierte mehrwertige Alkohole, wie Ethylenglykoldiacetat, 2,5-Diacetoxy-2,5-dihydrofuran, acetyliertes Sorbitol und Mannitol und acylierte Zucker, wie Pentaacetylglucose; Enolester; sowie N-acylierte Lactame, insbesondere N-Acylcaprolactame und N-Acylvalerolactame. Bevorzugt wird als Bleichaktivator Tetraacetylethylendiamin oder das Natriumsalz von 4-Nonanoyloxybenzolsulfonsäure eingesetzt, am meisten bevorzut ist der Bleichaktivator Tetraacetylethylendiamin.

Als wasserlösliches Bindemittel für die äußere Hüllschicht eignen sich sowohl anorganische als auch organische Bindemittel, die sich in Wasser oder einer alkalischen Reinigungsmittellösung lösen. Bevorzugt sind Bindemittel, die auch bei einer längeren Lagerung keine Reaktion mit dem Bleichaktivator oder mit aus dem Kern freigesetztem Wasserstoffperoxid zeigen.

Bevorzugte anorganische Bindemittel sind wasserlösliche Alkalimetallsilikate, besonders bevorzugt die als Wasserglas bezeichneten wasserlöslichen Natriumsilikate, wobei Wasserglas mit einem Modul von von 1,8 bis 2,5 am meisten bevorzugt ist.

Bevorzugte organische Bindemittel sind Vinylpolymere mit Carboxylgruppen, insbesondere Polymere von Acrylsäure und Methacrylsäure und Copolymere von Acrylsäure mit Methacrylsäure, Acrolein oder sulfonsäurehaltigen Vinylmonomeren, sowie deren Alkalimetallsalze, insbesondere Natriumsalze, wobei die Carboxylgruppen ganz oder teilweise zum Alkalimetallsalz umgesetzt sein können. Diese bevorzugten Bindemittel können bei einer Anwendung der erfindungsgemäßen Bleichmittelpartikel in einem Reinigungsmittel zusätzlich die Funktion eines Cobuilders übernehmen.

Daneben können aber auch andere wasserlösliche Polymere, wie Polyvinylalkohole und Polyvinylpyrrolidone als Bindemittel eingesetzt werden.

Die erfindungsgemäßen Bleichmittelpartikel enthalten den Bleichaktivator und das Bindemittel vorzugsweise in einem Gewichtsverhältnis von Bleichaktivator zu Bindemittel im Bereich von 20:1 bis 1:1, besonders bevorzugt 10:1 bis 4:1.

Die erfindungsgemäßen Bleichmittelpartikel enthalten Natriumpercarbonat und Bleichaktivator vorzugsweise in einem Gewichtsverhältnis von Bleichaktivator zu Natriumpercarbonat im Bereich von 1:1 bis 1:9, besonders bevorzugt im Bereich von 1:3 bis 1:5. Mit einer solchen Wahl des Gewichtsverhältnisses lässt sich bei der Verwendung eines Reinigungsmittels, das die erfindungsgemäßen Bleichmittelpartikel enthält, eine hohe Ausbeute an Percarbonsäure und damit eine hohe Bleichwirkung bezogen auf die eingesetzte Menge an Natriumpercarbonat und Bleichaktivator erzielen.

Zusätzlich zu der inneren und der äußeren Hüllschicht können die erfindungsgemäßen Bleichmittelpartikel noch eine oder mehrere weitere Hüllschichten enthalten, wobei diese sowohl zwischen dem Kern und der inneren Hüllschicht, als auch zwischen der inneren und der äußeren Hüllschicht oder außerhalb der erfindungsgemäßen Hüllschicht angeordnet sein können. Vorzugsweise liegt die innere Hüllschicht unmittelbar auf dem Kern aus im Wesentlichen Natriumpercarbonat auf und die äußere Hüllschicht liegt unmittelbar auf der inneren Hüllschicht auf.

Zwischen den Hüllschichten sowie zwischen der innersten Hüllschicht und dem Kern kann eine scharfe Grenze existieren, an der sich die Zusammensetzung sprunghaft ändert. In der Regel wird sich jedoch zwischen den einzelnen Hüllschichten, sowie zwischen der innersten Hüllschicht und dem Kern jeweils eine Übergangszone ausbilden, die die Komponenten der beiden aneinander grenzenden Schichten enthält. Solche Übergangszonen entstehen beispielsweise durch das Auftragen einer Hüllschicht in Form einer wässrigen Lösung, wobei zu Anfang des Schichtaufbaus ein Teil der darunter liegenden Schicht angelöst wird, so dass eine Übergangszone entsteht, die die Bestandteile beider Schichten enthält. In der bevorzugten Ausführungsform, bei der sich die innere Hüllschicht unmittelbar auf dem Kern aus im Wesentlichen Natriumpercarbonat befindet, kann sich so zwischen dem Kern und der inneren Hüllschicht eine Übergangsschicht bilden, die Natriumsulfat, Natriumcarbonat, Natriumhydrogencarbonat und Natriumpercarbonat, sowie Mischsalze dieser Komponenten enthält.

In einer bevorzugten Ausführungsform weisen die erfindungsgemäßen Bleichmittelpartikel eine über der äußeren Hüllschicht liegende zusätzliche Hüllschicht auf, die mindestens 50 Gew.-%, vorzugsweise mindestens 75 Gew.-%, Natriumsulfat in Form von Thenardit oder Burkeit enthält. Der Gewichtsanteil dieser zusätzlichen Hüllschicht beträgt vorzugsweise 2 bis 25 %, besonders bevorzugt 2 bis 10 %, bezogen auf die Masse des Bleichmittelpartikels. Bleichmittelpartikel mit einer solchen zusätzlichen Hüllschicht zeigen keine oder nur eine geringe Verbackung unter Druckeinwirkung und können deshalb sicher in einem Silo gelagert werden, ohne dass es zu Verbackungen im Silo kommt. Außerdem bewirkt die zusätzliche Hüllschicht eine Verbesserung der Stabilität des Bleichmittelpartikels in einer Reinigungsmittelzubereitung und vermeidet einen Verlust an Bleichwirkung bei der Lagerung einer Bleichmittelpartikel enthaltenden Reinigungsmittelzubereitung.

In einer weiteren Ausführungsform der Erfindung können die Bleichmittelpartikel eine über der äußeren Hüllschicht liegende zusätzliche Hüllschicht aufweisen, die als Hauptbestandteil ein Alkalimetallsilikat mit einem Modul SiO₂ zu Alkalimetalloxid von mehr als 2,5 enthält. Diese zusätzliche Hüllschicht enthält als Hauptbestandteil ein Alkalimetallsilikat, wenn sie keine weitere Komponente in einem Gewichtsanteil enthält, der größer ist als der Anteil an Alkalimetallsilikat. Der Modul des Alkalimetallsilikats liegt vorzugsweise im Bereich von 3 bis 5 und besonders bevorzugt im Bereich von 3,2 bis 4,2. Der Anteil dieser zusätzlichen Hüllschicht an dem erfindungsgemäßen Bleichmittelpartikel liegt vorzugsweise im Bereich von 0,2 bis 3 Gew.-%. Der Anteil an Alkalimetallsilikat im Material der zusätzlichen Hüllschicht beträgt vorzugsweise mehr als 50 Gew.-% und besonders bevorzugt mehr als 80 Gew.-%. Als Alkalimetallsilikat wird in der zusätzlichen Hüllschicht vorzugsweise Natriumsilikat und besonders bevorzugt Natriumwasserglas eingesetzt. Erfindungsgemäße Bleichmittelpartikel mit einer zusätzlichen Hüllschicht, die als Hauptbestandteil ein Alkalimetallsilikat mit einem Modul SiO₂ zu Alkalimetalloxid von mehr als 2,5 enthält, zeigen zusätzlich eine verzögerte Lösezeit in Wasser und eine verbesserte Lagerstabilität in wasserhaltigen flüssigen oder gelförmigen Medien bei Wassergehalten von bis zu 15 Gew.-%. Sie lassen sich deshalb vorteilhaft zur Herstellung von flüssigen oder gelförmigen Waschmittel- oder Reinigungsmittelzubereitungen einsetzen.

In einer weiteren Ausführungsform der Erfindung können die erfindungsgemäßen Bleichmittelpartikel auf ihrer Oberfläche zusätzlich 0,01 bis 1 Gew.-%, vorzugsweise 0,1 bis 0,5 Gew.-%, eines feinteiligen Oxids der Elemente Si, Al oder Ti oder eines Mischoxids dieser Elemente aufweisen. Geeignete feinteilige Oxide sind zum Beispiel pyrogene Oxide, die durch Flammhydrolyse von flüchtigen Verbindungen der Elemente Silizium, Aluminium oder Titan oder von Mischungen dieser Verbindungen erhalten werden. Die auf diesem Weg erhältlichen pyrogenen Oxide oder Mischoxide weisen vorzugsweise eine mittlere Primärpartikelgröße von weniger als 50 nm auf und können zu größeren Partikeln aggregiert sein, deren mittlere Partikelgröße vorzugsweise weniger als 20 µm beträgt. Ebenso geeignet sind gefällte Oxide, die aus wässrigen Lösungen von Verbindungen der Elemente Silizium, Aluminium oder Titan oder Mischungen dieser Verbindungen ausgefällt wurden. Die gefällten Oxide, bzw. Mischoxide können neben Silizium, Aluminium und/oder Titan noch geringe Mengen an Alkalimetall- oder Erdalkalimetallionen enthalten. Die mittlere Partikelgröße der gefällten Oxide beträgt vorzugsweise weniger als 50 µm und besonders bevorzugt weniger als 20 µm. Die spezifische Oberfläche der feinteiligen Oxide nach BET liegt vorzugsweise im Bereich von 100 bis 300 m²/g. Vorzugsweise weisen die Bleichmittelpartikel auf ihrer Oberfläche ein hydrophobiertes feinteiliges Oxid und besonders bevorzugt eine hydrophobierte pyrogene oder gefällte Kieselsäure auf. Hydrophobierte Oxide im Sinne der Erfindung sind Oxide, die an ihrer Oberfläche über chemische Bindungen gebundene organische Reste aufweisen und von Wasser nicht benetzt werden. Hydrophobierte Oxide können zum Beispiel durch Umsetzen von pyrogenen oder gefällten Oxiden mit Organosilanen, Silazanen oder Polysiloxanen hergestellt werden. Geeignete Siliziumverbindungen zur Herstellung von hydrophobierten Oxiden sind aus EP-A 0 722 992, Seite 3, Zeile 9 bis Seite 6, Zeile 6 bekannt. Besonders bevorzugt sind hydrophobierte Oxide, die durch Umsetzung eines feinteiligen Oxids mit einer Siliziumverbindung der in EP-A 0 722 992 angeführten Verbindungsklassen (a) bis (e) und (k) bis (m) hergestellt wurden. Die hydrophobierten feinteiligen Oxide weisen vorzugsweise eine Methanolbenetzbarkeit von mindestens 40 auf. Erfindungsgemäße Bleichmittelpartikel, die auf ihrer Oberfläche zusätzlich ein feinteiliges Oxid aufweisen, zeigen eine geringere Neigung zur Verbackung bei der Lagerung, vor allem bei der Lagerung unter Druckbelastung und sind deshalb besser silierbar. Darüber hinaus weisen solche Partikel in Reinigungsmitteln eine erhöhte Lagerstabilität auf.

Vorzugsweise weist der Kern der erfindungsgemäßen Bleichmittelpartikel eine im Wesentlichen kugelförmige Gestalt auf mit einer glatten Grenzfläche zur darüberliegenden inneren Hüllschicht. Die mittlere Rauheit Rₐ der Grenzfläche zwischen Kern und innerer Hüllschicht beträgt vorzugsweise weniger als 5 µm, bestimmt durch REM-Aufnahmen mit Materialkontrast für Grenzflächenabschnitte von 100 µm Länge an Schnittflächen der Partikel.

Die innere Hüllschicht weist vorzugsweise eine homogene Schichtdicke auf, wobei die Dicke der inneren Hüllschicht für mehr als 90 % der Schicht um weniger als 50 % von der mittleren Schichtdicke abweicht.

Die erfindungsgemäßen Bleichmittelpartikel zeigen eine unerwartet hohe Lagerstabilität, obwohl sie im gleichen Partikel Natriumpercarbonat und einen perhydrolysierbaren Bleichaktivator enthalten, die miteinander unter starker Wärmeentwicklung reagieren können. Die Wärmeentwicklung der erfindungsgemäßen Bleichmittelpartikel, bestimmt durch TAM-Messung mittels Thermal Activity Monitor der Firma Thermometric AB, Järfälla (SE), beträgt nach 48 h Lagerung bei 40 °C vorzugsweise weniger als 15 µW/g und besonders bevorzugt weniger als 10 µW/g. Nach 48 h Lagerung bei 50 °C beträgt die Wärmeentwicklung vorzugsweise weniger als 30 µW/g und besonders bevorzugt weniger als 12 µW/g. Die hohe Lagerstabilität und geringe Wärmeentwicklung ermöglicht eine Lagerung der erfindungsgemäßen Bleichmittelpartikel in großen Silos ohne die Gefahr einer selbstbeschleunigenden Zersetzung des im Silo gelagerten Materials. Sie ermöglicht außerdem einen sicheren Transport und eine sichere Handhabung der Bleichmittelpartikel unter klimatisch anspruchsvollen Bedingungen in heißen und feuchten Regionen.

Ein weiterer Gegenstand der Erfindung ist ein Reinigungsmittel, das erfindungsgemäße Bleichmittelpartikel enthält. Vorzugsweise ist das Reinigungsmittel ein Waschmittel zur Wäsche von Textilien, ein Zusatzbleichmittel für Waschmittel oder ein Geschirrreiniger zur maschinellen Reinigung von Geschirr, besonders bevorzugt ein Waschmittel zur Wäsche von Textilien. Das erfindungsgemäße Reinigungsmittel enthält die erfindungsgemäßen Bleichmittelpartikel vorzugsweise in einer Menge von 1 bis 50 Gew.-% bezogen auf die Gesamtmenge des Reinigungsmittels.

Das erfindungsgemäße Reinigungsmittel kann eine feste Form aufweisen und kann dann neben den erfindungsgemäßen Bleichmittelpartikeln noch weitere Komponenten in Form von Pulver oder in Form von Granulaten enthalten. Es kann darüber hinaus auch verpresste Formkörper umfassen, wobei die erfindungsgemäßen Bleichmittelpartikel Bestandteil der verpressten Formkörper sein können. Solche verpressten Formkörper in Form von Extrudaten, Pellets, Briketts oder Tabletten können durch Verfahren der Pressagglomeration, insbesondere durch Extrusion, Strangpressen, Lochpressen, Walzenkompaktieren oder Tablettieren hergestellt werden. Für die Durchführung der Pressagglomeration kann das erfindungsgemäße Reinigungsmittel zusätzlich ein Bindemittel enthalten, das den Formkörpern bei der Pressagglomeration eine höhere Festigkeit verleiht.

Vorzugsweise wird bei einem erfindungsgemäßen Reinigungsmittel, das verpresste Formkörper umfasst, aber kein zusätzliches Bindemittel verwendet und einer der waschaktiven Bestandteile, zum Beispiel ein nichtionisches Tensid, wirkt als Bindemittel beim Verpressen der Formkörper.

Das erfindungsgemäße Reinigungsmittel kann darüber hinaus auch eine flüssige Form oder Gelform aufweisen und die erfindungsgemäßen Bleichmittelpartikel in einer flüssigen Phase, beziehungsweise einer Gelphase dispergiert enthalten. Neben den erfindungsgemäßen Bleichmittelpartikeln können in der flüssigen Phase, beziehungsweise der Gelphase weitere Partikel dispergiert sein. Die rheologischen Eigenschaften der flüssigen Phase, beziehungsweise der Gelphase werden vorzugsweise so eingestellt, dass die darin dispergierten Partikel suspendiert bleiben und sich während einer Lagerung nicht absetzen. Die Zusammensetzung einer flüssigen Phase wird deshalb vorzugsweise so gewählt, dass sie thixotrope oder pseudoplastische Fließeigenschaften aufweist. Zur Einstellung solcher Fließeigenschaften können Suspensionshilfsmittel, wie quellende Tone, insbesondere Montmorillonite, gefällte und pyrogene Kieselsäuren, pflanzliche Gummis, insbesondere Xanthane und polymere Gelierungsmittel, wie Carboxylgruppen enthaltende Vinylpolymere zugesetzt werden.

Erfindungsgemäße Reinigungsmittel in flüssiger Form oder Gelform enthalten vorzugsweise erfindungsgemäße Bleichmittelpartikel mit einer zusätzlichen Hüllschicht, die als Hauptbestandteil ein Alkalimetallsilikat mit einem Modul SiO₂ zu Alkalimetalloxid von mehr als 2,5 enthält. In dieser Ausführungsform können die Reinigungsmittel bis zu 15 Gew.-% Wasser enthalten, ohne dass es während einer Lagerung zu einem Anlösen der Bleichmittelpartikel und einem dadurch bewirkten Freisetzen von Wasserstoffperoxid oder Peroxycarbonsäure in die flüssige Phase beziehungsweise Gelphase kommt.

Das erfindungsgemäße Reinigungsmittel kann neben den erfindungsgemäßen Bleichmittelpartikeln als weitere Komponenten noch Tenside, Builder, alkalische Komponenten, Enzyme, chelatisierende Komplexbildner, Vergrauungsinhibitoren, Schauminhibitoren, optische Aufheller, Duftstoffe und Farbstoffe enthalten.

Als Tenside eignen sich für das erfindungsgemäße Reinigungsmittel vor allem anionische, nichtionische und kationische Tenside.

Geeignete anionische Tenside sind zum Beispiel Tenside mit Sulfonatgruppen, vorzugsweise Alkylbenzolsulfonate, Alkansulfonate, alpha-Olefinsulfonate, alpha-Sulfofettsäureester oder Sulfosuccinate. Bei Alkylbenzolsulfonaten werden solche mit einer geradkettigen oder verzweigten Alkylgruppe mit 8 bis 20 Kohlenstoffatomen, insbesondere mit 10 bis 16 Kohlenstoffatomen bevorzugt. Bevorzugte Alkansulfonate sind solche mit gradkettigen Alkylketten mit 12 bis 18 Kohlenstoffatomen. Bei alpha-Olefinsulfonaten werden vorzugsweise die Reaktionsprodukte der Sulfonierung von alpha-Olefinen mit 12 bis 18 Kohlenstoffatomen eingesetzt. Bei den alpha-Sulfofettsäureestern werden Sulfonierungsprodukte von Fettsäureestern aus Fettsäuren mit 12 bis 18 Kohlenstoffatomen und kurzkettigen Alkoholen mit 1 bis 3 Kohlenstoffatomen bevorzugt. Als anionische Tenside eignen sich auch Tenside mit einer Sulfatgruppe im Molekül, vorzugsweise Alkylsulfate und Ethersulfate. Bevorzugte Alkylsulfate sind solche mit geradkettigen Alkylresten mit 12 bis 18 Kohlenstoffatomen. Geeignet sind außerdem beta-verzweigte Alkylsulfate und in der Mitte der längsten Alkylkette ein- oder mehrfach alkylsubstituierte Alkylsulfate. Bevorzugte Ethersulfate sind die Alkylethersulfate, die durch Ethoxylierung von linearen Alkoholen mit 12 bis 18 Kohlenstoffatomen mit 2 bis 6 Ethylenoxideinheiten und anschließende Sulfatierung erhalten werden. Als anionische Tenside können schließlich auch Seifen verwendet werden, wie zum Beispiel Alkalimetallsalze von Laurinsäure, Myristinsäure, Palmitinsäure, Stearinsäure und/oder natürlichen Fettsäuregemischen, wie zum Beispiel Kokos-, Palmkern- oder Talgfettsäuren.

Als nicht-ionische Tenside eignen sich zum Beispiel alkoxylierte Verbindungen, insbesondere ethoxylierte und propoxylierte Verbindungen. Besonders geeignet sind Kondensationsprodukte von Alkylphenolen oder Fettalkoholen mit 1 bis 50 mol, vorzugsweise 1 bis 10 mol Ethylenoxid und/oder Propylenoxid. Ebenfalls geeignet sind Polyhydroxyfettsäureamide, in denen am Amidstickstoff ein organischer Rest mit einer oder mehreren Hydroxylgruppen, welche auch alkoxyliert sein können, gebunden ist. Ebenfalls als nicht-ionische Tenside geeignet sind Alkylglycoside mit einer geradkettigen oder verzweigten Alkylgruppe mit 8 bis 22 Kohlenstoffatomen, insbesondere mit 12 bis 18 Kohlenstoffatomen und einem Mono- oder Diglycosidrest, der vorzugsweise von Glucose abgeleitet ist.

Geeignete kationische Tenside sind beispielsweise mono- und dialkoxylierte quaternäre Amine mit einem am Stickstoff gebundenen C₆- bis C₁₈-Alkylrest und ein oder zwei Hydroxyalkylgruppen.

Das erfindungsgemäße Reinigungsmittel enthält in der Regel außerdem Builder, die in der Lage sind, bei der Verwendung im Wasser gelöste Calcium- und Magnesiumionen zu binden. Geeignete Builder sind Alkalimetallphosphate und Alkalimetallpolyphosphate, insbesondere Pentanatriumtriphosphat; wasserlösliche und wasserunlösliche Natriumsilikate, insbesondere Schichtsilikate der Formel Na₅Si₂O₅; Zeolithe der Strukturen A, X und/oder P; sowie Trinatriumcitrat. Zusätzlich zu den Buildern können außerdem organische Cobuilder, wie zum Beispiel Polyacrylsäure, Polyasparaginsäure und/oder Acrylsäure-Copolymere mit Methacrylsäure, Acrolein oder sulfonsäurehaltigen Vinylmonomeren, sowie deren Alkalimetallsalze verwendet werden.

Das erfindungsgemäße Reinigungsmittel enthält außerdem in der Regel alkalische Komponenten, die bei bestimmungsgemäßer Anwendung in der wässrigen Reinigungsmittellösung einen pH-Wert im Bereich von 8 bis 12 bewirken. Als alkalische Komponenten sind vor allem Natriumcarbonat, Natriumsesquicarbonat, Natriummetasilikat und andere lösliche Alkalimetallsilikate geeignet.

Das erfindungsgemäße Reinigungsmittel kann weiterhin Enzyme enthalten, die die Reinigungswirkung verstärken, insbesondere Lipasen, Cutinasen, Amylasen, neutrale und alkalische Proteasen, Esterasen, Zellulasen, Mannanasen, Pektinasen, Lactasen, Perhydrolasen und/oder Peroxidasen. Die Enzyme können dabei an Trägerstoffe adsorbiert oder in Hüllsubstanzen eingebettet sein, um sie gegen Zersetzung zu schützen.

Das erfindungsgemäße Reinigungsmittel kann außerdem chelatisierende Komplexbildner für Übergangsmetalle enthalten, mit denen sich eine katalytische Zersetzung von Aktivsauerstoffverbindungen in der wässrigen Reinigungsmittellösung vermeiden lässt. Geeignet sind zum Beispiel Phosphonate, wie Hydroxyethan-1,1-diphosphonat, Nitrilotrimethylenphosphonat, Diethylentriaminpenta(methylenphosphonat), Ethlyendiamintetra(methylenphosphonat), Hexamethylendiamintetra(methylenphosphonat) und deren Alkalimetallsalze. Ebenfalls geeignet sind Nitrilotriessigsäure und Polyaminocarbonsäuren, wie insbesondere Ethylendiamintetraessigsäure, Diethylentriaminpentaessigsäure, Ethylendiamin-N,N'-disuccinsäure, Methylglycindiessigsäure und Polyaspartate, sowie deren Alkalimetall- und Ammoniumsalze. Schließlich sind auch mehrwertige Carbonsäuren und insbesondere Hydroxycarbonsäuren, wie insbesondere Weinsäure und Zitronensäure als chelatisierende Komplexbildner geeignet.

Das erfindungsgemäße Reinigungsmittel kann in der Ausführungsform eines Waschmittels für Textilien zusätzlich Vergrauungsinhibitoren enthalten, die von der Faser abgelösten Schmutz suspendiert halten und ein Wiederaufziehen des Schmutzes auf die Faser verhindern. Geeignete Vergrauungsinhibitoren sind zum Beispiel Celluloseether, wie Carboxymethylcellulose und deren Alkalimetallsalze, Methylcellulose, Hydroxyethylcellulose und Hydroxypropylcellulose. Ebenfalls geeignet ist Polyvinylpyrrolidon.

Das erfindungsgemäße Reinigungsmittel kann weiterhin auch Schauminhibitoren enthalten, die eine Schaumbildung verringern. Geeignete Schauminhibitoren sind zum Beispiel Organopolysiloxane wie Polydimethylsiloxan, Paraffine und/oder Wachse, sowie deren Gemische mit feinteiligen Kieselsäuren.

Das erfindungsgemäße Reinigungsmittel kann in der Ausführungsform eines Waschmittels für Textilien gegebenenfalls optische Aufheller enthalten, die auf die Faser aufziehen, im UV-Bereich Licht absorbieren und blau fluoreszieren, um eine Vergilbung der Faser auszugleichen. Geeignete optische Aufheller sind zum Beispiel Derivate der Diaminostilbendisulfonsäure, wie Alkalimetallsalze von 4,4'-Bis-(2-anilino-4-morpholino-1,3,5-triazinyl-6-amino)-stilben-2,2'-disulfonsäure oder substituierte Diphenylstyryle, wie Alkalimetallsalze von 4,4'-Bis-(2-sulfostyryl)-diphenyl.

Das erfindungsgemäße Reinigungsmittel kann schließlich auch noch Duftstoffe und Farbstoffe enthalten.

Ein erfindungsgemäßes Reinigungsmittel in flüssiger Form oder Gelform kann zusätzlich noch bis zu 30 Gew.-% organische Lösungsmittel, wie zum Beispiel Methanol, Ethanol, n-Propanol, Isopropanol, n-Butanol, Ethylenglykol, 1,2-Propylenglykol, 1,3-Propylenglykol, 1,4-Butylenglykol, Glycerin, Diethylenglykol, Ethylenglykolmethylether, Ethanolamin, Diethanolamin und/oder Triethanolamin enthalten.

Das erfindungsgemäße Reinigungsmittel zeigt gegenüber Reinigungsmitteln, die an Stelle der erfindungsgemäßen Bleichmittelpartikel aus dem Stand der Technik bekannte Natriumpercarbonat und einen Bleichaktivator enthaltende Bleichmittelpartikel enthalten, eine bessere Lagerstabilität mit geringeren Verlusten an Aktivsauerstoffgehalt und Bleichleistung bei einer Lagerung unter feuchten Bedingungen.

Die erfindungsgemäßen Bleichmittelpartikel lassen sich mit dem erfindungsgemäßen Verfahren herstellen, das mindestens zwei Schritte umfasst. Im ersten Schritt des erfindungsgemäßen Verfahrens wird eine Natriumsulfat enthaltende wässrige Lösung auf ein im Wesentlichen aus Natriumpercarbonat bestehendes Partikel unter gleichzeitigem Verdampfen von Wasser aufgesprüht. Im zweiten Schritt des erfindungsgemäßen Verfahrens werden dann auf die im ersten Schritt gebildeten umhüllten Partikel eine wässrigen Lösung oder Dispersion eines wasserlöslichen Bindemittels und Partikel eines Bleichaktivators, ausgewählt aus perhydrolysierbaren N-Acylverbindungen und O-Acylverbindungen, aufgebracht. Durch die Verwendung einer wässrigen Lösung oder Dispersion des Bindemittels wird gegenüber der Verwendung von geschmolzenem Bindemittel eine einheitlichere Dicke der äußeren Hüllschicht erzielt und eine Agglomeration der Bleichmittelpartikel vermieden, so dass Bleichmittelpartikel mit einer engeren Partikelgrößenverteilung hergestellt werden können.

Im ersten Schritt des erfindungsgemäßen Verfahrens wird während des Aufsprühens der Natriumsulfat enthaltenden wässrigen Lösung vorzugsweise bereits der größte Teil des darin enthaltenen Wassers, insbesondere mehr als 90% des in der wässrigen Lösung enthaltenen Wassers, durch Wärmezufuhr verdampft, so dass während des Aufbringens der inneren Hüllschicht nur ein geringer Teil des Kerns angelöst wird und sich bereits während des Aufsprühens eine feste Hüllschicht ausbildet. Das Aufbringen der inneren Hüllschicht erfolgt vorzugsweise durch Versprühen einer Natriumsulfat enthaltenden wässrigen Lösung in einer Wirbelschicht und besonders bevorzugt nach dem in
EP-A 0 970 917 beschriebenen Verfahren, mit dem bereits mit geringen Mengen an Hüllschichtmaterial eine dichte Hüllschicht erreicht werden kann. Das Aufbringen der inneren Hüllschicht in einer Wirbelschicht erfolgt vorzugsweise unter Zufuhr eines Trocknungsgases zur Wirbelschicht, so dass sich in der Wirbelschicht eine Temperatur im Bereich von 30 bis 90 °C, vorzugsweise 45 bis 70 °C, einstellt. Als Trocknungsgas wird vorzugsweise erhitzte Luft oder eine Mischung aus Luft und einem Verbrennungsgas verwendet, wobei als Verbrennungsgas bevorzugt ein durch Verbrennung von Erdgas mit Luft erhaltenes Verbrennungsgas verwendet wird. Der beim Aufbringen der inneren Hüllschicht in einer Wirbelschicht mit dem Trocknungsgas ausgetragene Staub wird vorzugsweise zur Herstellung der Natriumsulfat enthaltenden wässrigen Lösung eingesetzt, die zum Aufbringen der inneren Hüllschicht verwendet wird.

Im zweiten Schritt des erfindungsgemäßen Verfahrens können die wässrige Lösung oder Dispersion des Bindemittels und die Partikel eines Bleichaktivators gleichzeitig oder nacheinander auf die im ersten Schritt erhaltenen umhüllten Partikel aufgebracht werden. Die wässrige Lösung oder Dispersion des Bindemittels und die Partikel eines Bleichaktivators können getrennt voneinander aufgebracht werden. Ebenso können die Partikel des Bleichaktivators aber auch suspendiert in der wässrigen Lösung oder Dispersion des Bindemittels aufgebracht werden.

Vorzugsweise wird der zweite Schritt des erfindungsgemäßen Verfahrens in einer Wirbelschicht unter gleichzeitigem Verdampfen von Wasser durchgeführt. Die wässrige Lösung oder Dispersion des Bindemittels wird dabei vorzugsweise über eine Düse, besonders bevorzugt über eine Zweistoff- oder Mehrstoffdüse mit Luft als Treibgas, in eine Wirbelschicht eingesprüht, die die im ersten Schritt erhaltenen umhüllten Partikel enthält und der ein Trocknungsgas zugeführt wird, so dass sich in der Wirbelschicht eine Temperatur im Bereich von 30 bis 90 °C, vorzugsweise 45 bis 70 °C, einstellt. Die Partikel des Bleichaktivators können als trockenes Pulver direkt in die Wirbelschicht eingebracht werden oder Pulverförmig einer zum Versprühen der wässrigen Lösung oder Dispersion des Bindemittels eingesetzten Mehrstoffdüse zugeführt werden. Alternativ können die Partikel des Bleichaktivators unmittelbar vor dem Versprühen in der wässrigen Lösung oder Dispersion des Bindemittels suspendiert werden, wobei die erhaltene Suspension vorzugsweise vor der Zufuhr zur Sprühdüse über eine Dispergiervorrichtung geführt wird, in der eine Scherung der Suspension zwischen einem Rotorelement und einem Statorelement erfolgt. Geeignete Dispergiervorrichtungen sind beispielsweise die von der Firma Ika vertriebenen Inline-Dispergiergeräte der Baureihen Ultra-Turrax® und Dispax®. Die Dispergiervorrichtung wird vorzugsweise so ausgelegt und betrieben, dass sie in der Suspension Agglomerate mit einem Durchmesser zerstört, der mehr als ein Drittel der minimalen Kanalabmessung der verwendeten Mehrstoffdüse beträgt. Wird die Suspension durch einen zentralen Kanal einer Mehrstoffdüse geführt, dann bezieht sich die minimale Kanalabmessung auf den minimalen Durchmesser des zentralen Kanals. Wird die Suspension durch einen ringförmigen Kanal einer Mehrstoffdüse geführt, dann bezieht sich die minimale Kanalabmessung auf die minimale Breite des Ringspalts.

In einer bevorzugten Ausführungsform wird anschließend an den zweiten Schritt in einem weiteren Schritt auf die im zweiten Schritt gebildeten umhüllten Partikel eine Natriumsulfat enthaltende wässrige Lösung unter gleichzeitigem Verdampfen von Wasser aufgesprüht. Mit diesem weiteren Schritt wird zusätzlich zur inneren und äußeren Hüllschicht eine weitere Natriumsulfat enthaltende Schicht aufgebracht. Dieser weitere Schritt wird vorzugsweise in einer Wirbelschicht durchgeführt, wobei besonders bevorzugt die Wirbelschicht so betrieben wird, wie zuvor für den ersten Schritt beschrieben, mit Ausnahme der Verwendung des mit dem Trocknungsgas ausgetragenen Staubs.

In einer bevorzugten Ausführungsform des erfindungsgemäßen Verfahrens werden die Bleichmittelpartikel nach dem Aufbringen einer äußeren Hüllschicht im zweiten Schritt des Verfahrens bei einer Temperatur im Bereich von 60 bis 95 °C, vorzugsweise im Bereich von 70 bis 90 °C, getrocknet, wobei die Trocknung vorzugsweise über mindestens 2 min erfolgt und besonders bevorzugt über 4 bis 20 min erfolgt. Wenn nach dem zweiten Schritt eine zusätzliche Hüllschicht aufgebracht wird, erfolgt die Trocknung vorzugsweise nach dem Aufbringen der zusätzlichen Hüllschicht.

Die folgenden Beispiele illustrieren die Erfindung, ohne jedoch den Gegenstand der Erfindung zu beschränken.

### Beispiele

Für die Beispiele 1 bis 13 wurde ein umhülltes Natriumpercarbonat eingesetzt, das mit 7 Gew.-% einer Hüllschicht umhüllt war, die durch Aufsprühen einer wässrigen Lösung, enthaltend 23,0 Gew.-% Natriumsulfat und 3,4 Gew.-% Natriumcarbonat, in einer Wirbelschicht auf ein durch Wirbelschichtaufbaugranulation hergestelltes Natriumpercarbonat hergestellt war. Das eingesetzte umhüllte Natriumpercarbonat hatte einen Aktivsauerstoffgehalt von 13,2 %, entsprechend einem Gehalt an Natriumpercarbonat von 86,4 Gew.-%, ein Schüttgewicht von 1120 g/l, eine gewichtsbezogene mittlere Partikelgröße von 820 µm, eine Breite der Partikelgrößenverteilung (span) berechnet als (d₉₀-d₁₀) /d₅₀ von 0, 82 und eine Wärmefreisetzung im TAM-Test nach 48 h Lagerung bei 40 °C von 2,3 µW/g.

### Beispiel 1

Der Versuch wurde in einem Wirbelschichtcoater Modell Mycrolab der Firma OYSTAR Hüttlin durchgeführt, der mit einem 1 l Produktbehälter und einer von unten eingebauten Dreistoffdüse ausgestattet war und mit Unterdruck in der Wirbelschicht und 35 Nm³/h Luft mit 80 °C als Fluidisierungsgas betrieben wurde.

Als Bindemittel wurde Natriumpolyacrylat mit einem mittleren Molekulargewicht von 1900 g/mol in Form einer 45 Gew.-% wässrigen Lösung verwendet. Als Bleichaktivator wurde TAED der Firma Wfk verwendet, das in einem Mörser verrieben wurde und aus dem durch Sieben durch ein Sieb mit einer Maschenweite von 200 µm grobe Partikel entfernt wurden.

Im vorgeheizten Wirbelschichtcoater wurden 400 g umhülltes Natriumpercarbonat vorgelegt und auf eine Wirbelschichttemperatur von 45 °C aufgeheizt. Dann wurde über die Dreistoffdüse die Bindemittellösung mit einer Sprührate von 3,75 g/min und einem Sprühdruck von 0,8 bar in die Wirbelschicht gesprüht, wobei sich eine Wirbelschichttemperatur von 55°C ergab, und es wurden in Intervallen von jeweils 5 min 5 Portionen zu je 20 g TAED als Pulver in die Wirbelschicht eingesaugt. Nach Zugabe der letzten Portion TAED und Versprühen von insgesamt 100 g Bindemittellösung wurden über die gleiche Sprühdüse 50 g Natriumsulfat als 25 Gew.-% wässrige Lösung mit einer Sprührate von 6 g/min aufgesprüht, wobei sich eine Wirbelschichttemperatur von 45°C ergab. Anschließend wurde noch 5 min im Wirbelschichtcoater nachgetrocknet, wobei die Wirbelschichttemperatur auf 65 °C anstieg, und das Produkt danach im Trockenschrank 1 h bei 80 °C getrocknet.

Die so hergestellten Bleichmittelpartikel wiesen einen Aktivsauerstoffgehalt von 10,0 %, entsprechend einem Gehalt an Natriumpercarbonat von 65,4 Gew.-%, einen Gehalt an TAED von 12,1 Gew.-%, ein Schüttgewicht von 880 g/l, eine gewichtsbezogene mittlere Partikelgröße von 940 µm, eine Breite der Partikelgrößenverteilung (span) von 0,84 und eine Wärmefreisetzung im TAM-Test nach 48 h Lagerung bei 40 °C von 5,3 µW/g auf.

### Beispiele 2 bis 4

TAED AC white der Firma Clariant wurde in einer Labormühle Modell A10 der Firma Ika in Portionen zu je 40 g für jeweils 30 s zerkleinert. In einer Küchenmaschine Modell K3000 Typ 3210 der Firma Braun, ausgestattet mit Edelstahlbehälter und Knetwerkzeug, wurden 400 g umhülltes Natriumpercarbonat vorgelegt und bei maximaler Drehzahl wurde die in Tabelle 1 angegebene Menge an Bindemittel zugetropft und parallel dazu 200 g des zerkleinerten TAED in Portionen zu je 20 g zugegeben. Nach beendeter Zugabe wurde noch 2 min gemischt und die Mischung in einen Wirbelschichtcoater Modell Mycrolab der Firma OYSTAR Hüttlin eingesaugt, der mit einem 1 l Produktbehälter und einer von unten eingebauten Zweistoffdüse mit der in DE 38 06 537 A1 beschriebenen Bauweise ausgestattet war und mit Unterdruck in der Wirbelschicht und 35 Nm³/h Luft mit 80 °C als Fluidisierungsgas betrieben wurde. Sobald die Temperatur in der Wirbelschicht auf 60 °C angestiegen war, wurden 250 g einer 25 Gew.-% wässrigen Natriumsulfatlösung mit einer Sprührate von 6 g/min bei einer Wirbelschichttemperatur von 60 °C aufgesprüht. Anschließend wurde 5 min in der Wirbelschicht nachgetrocknet, wobei die Temperatur auf 75 °C anstieg und das Produkt danach in einem Trockenschrank 1 h bei 85 °C getrocknet.

Die analysierten Gehalte an Aktivsauerstoff und TAED, die Wärmefreisetzung im TAM-Test nach 48 h Lagerung bei 40 °C bzw. 50 °C und die Lösezeit in Wasser sind in Tabelle 1 angeführt. Zur Bestimmung der Lösezeit wurden 2,5 g Natriumpercarbonatpartikel in einer thermostatisierten Messzelle aus Glas (Durchmesser 130 mm, Höhe 150 mm) unter Rühren mit einem Magnetrührer bei 20 °C in 1 l Wasser gelöst. Die Rührgeschwindigkeit wurde so gewählt, dass sich ein Wirbeltrichter von 4 cm Tiefe ausbildete. Während des Auflösevorgangs wurde die Änderung der elektrischen Leitfähigkeit der Lösung gemessen. Die Lösezeit ist die Zeit, in der 90 % der Endleitfähigkeit erreicht wird.

### Beispiel 5

Beispiel 2 wurde wiederholt mit dem Unterschied, dass im Anschluss an das Aufsprühen der Natriumsulfatlösung und vor dem Nachtrocknen in der Wirbelschicht durch die gleiche Düse und mit der gleichen Sprührate 34 g einer 10 Gew.-% wässrigen Natriumsilikatlösung mit einem Modul von 3,3 aufgesprüht wurde.

**Tabelle 1**

| Beispiel | Bindemittel | AO-Gehalt in Gew.-% | TAED-Gehalt in Gew.-% | TAM 40 °C in µW/g | TAM 50 °C in µW/g | Lösezeit in min |
|---|---|---|---|---|---|---|
| 2 | 60 g Acusol* | 8,4 | 24,6 | 1,8 | 4,4 | 103 |
| 3 | 60 g Acusol* + 20 g Wasserglas** | 7,8 | 24,1 | 1, 9 | 5, 9 | 120 |
| 4 | 68 g Wasserglas** | 8, 6 | 23,1 | 8,5 | 27,8 | 79 |
| 5 | 60 g Acusol* | 8,2 | 26,0 | 1,5 | 4,3 | 174 |

| | | | | | | |
|---|---|---|---|---|---|---|
| * Acusol™ 445 N (Natriumpolyacrylat Mw 4500 g/mol), 45 Gew.-% wässrige Lösung ** 36 Gew.-% wässrige Natriumsilikatlösung, Modul 3,3 | | | | | | |

### Beispiele 6 bis 10

Jeweils 400 g TAED AC white der Firma Clariant wurden in einer Küchenmaschine Modell K3000 Typ 3210 der Firma Braun, ausgestattet mit Universal-Kunststoffbehälter und Schneidmesser, bei maximaler Drehzahl für 30 bis 45 s zerkleinert. Aus dem zerkleinerten Material wurden Partikel mit einer Größe von mehr als 400 µm durch Sieben mit einer Siebmaschine Modell Jelxix 50 der Firma Retsch mit einem Sieb mit 400 µm Maschenweite entfernt. In der gleichen Küchenmaschine, ausgestattet mit Edelstahlbehälter und Knetwerkzeug, wurde umhülltes Natriumpercarbonat in der in Tabelle 2 angegebenen Menge vorgelegt. Die in Tabelle 2 angeführte Menge an Acusol wurde mit der gleichen Menge an Wasser verdünnt und bei maximaler Drehzahl wurden 10 g der verdünnten Lösung innerhalb von 10 s aufgesprüht. Danach wurde eine Portion des zerkleinerten TEAD entsprechend dem Mengenverhältnis von TAED zu Acusol aus Tabelle 2 langsam zudosiert und die Schritte von Aufsprühen von Acusol-Lösung und Zudosieren von TAED wiederholt, bis die gesamte Menge an Bindemittel und TAED aufgebracht war. Anschließend wurde weitere 2 min bei maximaler Drehzahl gemischt und danach wurden aus dem erhaltenen Material Agglomerate durch Sieben mit einem Sieb mit 1600 µm Maschenweite entfernt. Auf das gesiebte Material wurde wie in den Beispielen 2 bis 4 eine zusätzliche Hüllschicht aus Natriumsulfat in der in Tabelle 2 angegebenen Menge aufgebracht.

Die analysierten Gehalte an Aktivsauerstoff und TAED, die Wärmefreisetzung im TAM-Test nach 48 h Lagerung bei 40 °C bzw. 50 °C und die Lösezeit in Wasser sind in Tabelle 2 angeführt.

**Tabelle 2**

| Beispiel | NaPC in g | TAED in g | Acusol* in g | Na₂SO₄ in g | AO-Gehalt in Gew.-% | TAED-Gehalt in Gew.-% | TAM 40 °C in µW/g | TAM 50 °C in µW/g | Lösezeit in min |
|---|---|---|---|---|---|---|---|---|---|
| 6 | 450 | 450 | 77 | 90 | 5, 9 | 37,0 | 1,0 | 3,2 | 46 |
| 7 | 900 | 450 | 120 | 157 | 8, 6 | 25,5 | 3,0 | 9, 9 | 55 |
| 8 | 996 | 332 | 100 | 150 | n.b. | n.b. | n.b. | 7,6 | n.b. |
| 9 | 1080 | 270 | 72 | 157 | 9,7 | n.b. | 1,7 | 4, 6 | 55 |
| 10 | 1665 | 335 | 30 | 212 | 9,8 | 15,7 | 3, 6 | 6,4 | 59 |

| | | | | | | | | | |
|---|---|---|---|---|---|---|---|---|---|
| NaPC Natriumpercarbonat * Acusol™ 445 N (Natriumpolyacrylat Mw 4500 g/mol), 45 Gew.-% Lösung in Wasser n.b. nicht bestimmt | | | | | | | | | |

### Beispiele 11 und 12

In den Beispielen 11 und 12 wurde Beispiel 9 wiederholt mit dem Unterschied, dass in Beispiel 11 keine zusätzliche Hüllschicht aus Natriumsulfat aufgebracht wurde und in Beispiel 12 nach dem Aufbringen der zusätzlichen Hüllschicht keine Nachtrocknung in der Wirbelschicht und im Trockenschrank durchgeführt wurde.

Das in Beispiel 11 erhaltene Produkt zeigte eine Wärmefreisetzung im TAM-Test nach 48 h Lagerung bei 40 °C von 12,3 µW/g.

Das in Beispiel 12 erhaltene Produkt zeigte eine Wärmefreisetzung im TAM-Test nach 48 h Lagerung bei 40 °C von 5,5 µW/g.

### Beispiel 13

TAED wurde wie in den Beispielen 6 bis 12 zerkleinert und gesiebt. In einem Pflugscharmischer Modell M5R der Firma Lödige wurden 1125 g umhülltes Natriumpercarbonat vorgelegt. Bei einer Mischdrehzahl von 190 min⁻¹ wurden 82 g Acusol™ 445 N, verdünnt mit der gleichen Menge Wasser, sowie 375 g zerkleinertes TAED in gleicher Weise wie in den Beispielen 6 bis 10 aufgebracht und weitere 2 min bei der gleichen Drehzahl gemischt. Aus dem erhaltenen Material wurden Agglomerate durch Sieben mit einem Sieb mit 1600 µm Maschenweite entfernt. Auf das gesiebte Material wurde wie in den Beispielen 2 bis 4 eine zusätzliche Hüllschicht aus 166 g Natriumsulfat aufgebracht.

Die analysierten Gehalte an Aktivsauerstoff und TAED und die Wärmefreisetzung im TAM-Test nach 48 h Lagerung bei 50 °C sind in Tabelle 3 angeführt.

### Beispiel 14 (nicht erfindungsgemäß)

Beispiel 13 wurde wiederholt mit dem Unterschied, dass 1600 g in gleicher Weise durch Wirbelschichtgranulation hergestelltes Natriumpercarbonat eingesetzt wurde, das keine Hüllschicht aus Natriumsulfat und Natriumcarbonat aufwies, im Pflugscharmischer eine Hüllschicht aus 400 g TAED und 100 g Acusol™ 445 N aufgebracht wurde und danach eine zusätzliche Hüllschicht aus 222 g Natriumsulfat aufgebracht wurde. Die analysierten Gehalte an Aktivsauerstoff und TAED und die Wärmefreisetzung im TAM-Test nach 48 h Lagerung bei 50 °C sind in Tabelle 3 angeführt.

### Beispiel 15

Beispiel 13 wurde wiederholt mit dem Unterschied, dass ein Natriumpercarbonat eingesetzt wurde, das an Stelle der Hüllschicht aus Natriumsulfat und Natriumcarbonat eine Hüllschicht aus 7 Gew.-% Natriumsulfat (bezogen auf das Gewicht des einfach umhüllten Natriumpercarbonats) aufwies, im Pflugscharmischer eine Hüllschicht aus 375 g TAED und 134 g Acusol™ 445 N aufgebracht wurde und danach eine zusätzliche Hüllschicht aus 166 g Natriumsulfat aufgebracht wurde. Die analysierten Gehalte an Aktivsauerstoff und TAED und die Wärmefreisetzung im TAM-Test nach 48 h Lagerung bei 50 °C sind in Tabelle 3 angeführt.

**Tabelle 3**

| Beispiel | AO-Gehalt in Gew.-% | TAED-Gehalt in Gew.-% | TAM 50 °C in µW/g |
|---|---|---|---|
| 13 | 9,0 | 20,1 | 6, 6 |
| 14* | 10,7 | 13,3 | 98 |
| 15 | 8, 8 | 20,8 | 9,3 |

| | | | |
|---|---|---|---|
| * nicht erfindungsgemäß | | | |

## Patentansprüche

1. Bleichmittelpartikel, umfassend
a) einen Kern im Wesentlichen bestehend aus Natriumpercarbonat,
b) eine innere Hüllschicht, enthaltend mindestens 50 Gew.-% Natriumsulfat in Form von Thenardit oder Burkeit, und
c) eine äußere Hüllschicht, enthaltend ein wasserlösliches Bindemittel und mindestens einen Bleichaktivator ausgewählt aus perhydrolysierbaren N-Acylverbindungen und O-Acylverbindungen.

2. Bleichmittelpartikel nach Anspruch 1,
**dadurch gekennzeichnet,**
**dass** der Kern ein durch Wirbelschichtaufbaugranulation erhältliches Natriumpercarbonatpartikel ist.

3. Bleichmittelpartikel nach Anspruch 1 oder 2,
**dadurch gekennzeichnet,**
**dass** der Kern einen Durchmesser im Bereich von 400 bis 1600 µm aufweist.

4. Bleichmittelpartikel nach einem der Ansprüche 1 bis 3,
**dadurch gekennzeichnet,**
**dass** die innere Hüllschicht Natriumsulfat und Natriumcarbonat in einem Gewichtsverhältnis von 95:5 bis 75:25 enthält und der Anteil von Natriumsulfat und Natriumcarbonat an der Hüllschicht mindestens 80 Gew.-% beträgt.

5. Bleichmittelpartikel nach einem der Ansprüche 1 bis 4,
**dadurch gekennzeichnet,**
**dass** der Gewichtsanteil der inneren Hüllschicht 2 bis 25 %, vorzugsweise 2 bis 10 %, bezogen auf die Masse des Bleichmittelpartikels beträgt.

6. Bleichmittelpartikel nach einem der Ansprüche 1 bis 5,
**dadurch gekennzeichnet,**
**dass** die äußere Hüllschicht den Bleichaktivator in Form von Partikeln mit einer mittleren Partikelgröße im Bereich von 0,1 bis 400 µm enthält.

7. Bleichmittelpartikel nach einem der Ansprüche 1 bis 6,
**dadurch gekennzeichnet,**
**dass** der Bleichaktivator Tetraacetylethylendiamin oder das Natriumsalz von 4-Nonanoyloxybenzolsulfonsäure ist.

8. Bleichmittelpartikel nach einem der Ansprüche 1 bis 7,
**dadurch gekennzeichnet,**
**dass** das Bindemittel ein wasserlösliches Alkalimetallsilikat oder ein Vinylpolymer mit Carboxylgruppen ist.

9. Bleichmittelpartikel nach einem der Ansprüche 1 bis 8,
**dadurch gekennzeichnet,**
**dass** das Gewichtsverhältnis von Bleichaktivator zu Natriumpercarbonat im Bereich von 1:1 bis 1:9, vorzugsweise von 1:3 bis 1:5, liegt.

10. Bleichmittelpartikel nach einem der Ansprüche 1 bis 9, **dadurch gekennzeichnet,**
**dass** das Gewichtsverhältnis von Bleichaktivator zu Bindemittel im Bereich von 20:1 bis 1:1 liegt.

11. Bleichmittelpartikel nach einem der Ansprüche 1 bis 10,
**dadurch gekennzeichnet,**
**dass** es eine über der äußeren Hüllschicht liegende zusätzliche Hüllschicht aufweist, die mindestens 50 Gew.-% Natriumsulfat in Form von Thenardit oder Burkeit enthält.

12. Bleichmittelpartikel nach Anspruch 11,
**dadurch gekennzeichnet,**
**dass** der Gewichtsanteil der zusätzlichen Hüllschicht 2 bis 25 %, vorzugsweise 2 bis 10 %, bezogen auf die Masse des Bleichmittelpartikels beträgt.

13. Reinigungsmittel,
enthaltend Bleichmittelpartikel nach einem der Ansprüche 1 bis 12.

14. Verfahren zur Herstellung von Bleichmittelpartikeln gemäß Anspruch 1, umfassend
a) Aufsprühen einer Natriumsulfat enthaltenden wässrigen Lösung auf im Wesentlichen aus Natriumpercarbonat bestehende Partikel unter gleichzeitigem Verdampfen von Wasser und
b) Aufbringen einer wässrigen Lösung oder Dispersion eines wasserlöslichen Bindemittels und von Partikeln eines Bleichaktivators, ausgewählt aus perhydrolysierbaren N-Acylverbindungen und O-Acylverbindungen, auf die in Schritt a) gebildeten umhüllten Partikel.

15. Verfahren nach Anspruch 14,
**dadurch gekennzeichnet,**
**dass** Schritt b) in einer Wirbelschicht unter gleichzeitigem Verdampfen von Wasser durchgeführt wird.

16. Verfahren nach Anspruch 14 oder 15,
**dadurch gekennzeichnet,**
**dass** in einem weiteren Schritt c) auf die in Schritt b) gebildeten umhüllten Partikel eine Natriumsulfat enthaltende wässrige Lösung unter gleichzeitigem Verdampfen von Wasser aufgesprüht wird.

17. Verfahren nach einem der Ansprüche 14 bis 16,
**dadurch gekennzeichnet,**
**dass** nach Aufbringen einer äußeren Hüllschicht in Schritt b) eine Trocknung bei einer Temperatur im Bereich von 60 bis 95 °C durchgeführt wird.

## Claims

1. Bleach particle comprising
a) a core consisting essentially of sodium percarbonate,
b) an inner coating layer comprising at least 50% by weight of sodium sulfate in the form of thenardite or burkeite, and
c) an outer coating layer comprising a water-soluble binder and at least one bleach activator selected from perhydrolyzable N-acyl compounds and O-acyl compounds.

2. Bleach particle according to Claim 1,
**characterized in that**
the core is a sodium percarbonate particle obtainable by fluidized-bed buildup granulation.

3. Bleach particle according to Claim 1 or 2,
**characterized in that**
the core has a diameter in the range from 400 to 1600 µm.

4. Bleach particle according to any one of Claims 1 to 3,
**characterized in that**
the inner coating layer comprises sodium sulfate and sodium carbonate in a weight ratio of from 95:5 to 75:25 and the fraction of sodium sulfate and sodium carbonate in the coating layer is at least 80% by weight.

5. Bleach particle according to any one of Claims 1 to 4,
**characterized in that**
the weight fraction of the inner coating layer is 2 to 25%, preferably 2 to 10%, based on the mass of the bleach particle.

6. Bleach particle according to any one of Claims 1 to 5,
**characterized in that**
the outer coating layer comprises the bleach activator in the form of particles with an average particle size in the range from 0.1 to 400 µm.

7. Bleach particle according to any one of Claims 1 to 6,
**characterized in that**
the bleach activator is tetraacetylethylenediamine or the sodium salt of 4-nonanoyloxybenzenesulfonic acid.

8. Bleach particle according to any one of Claims 1 to 7,
**characterized in that**
the binder is a water-soluble alkali metal silicate or a vinyl polymer with carboxyl groups.

9. Bleach particle according to any one of Claims 1 to 8,
**characterized in that**
the weight ratio of bleach activator to sodium percarbonate is in the range from 1:1 to 1:9, preferably from 1:3 to 1:5.

10. Bleach particle according to any one of Claims 1 to 9,
**characterized in that**
the weight ratio of bleach activator to binder is in the range from 20:1 to 1:1.

11. Bleach particle according to any one of Claims 1 to 10,
**characterized in that**
it has an additional coating layer which is positioned on top of the outer coating layer and comprises at least 50% by weight of sodium sulfate in the form of thenardite or burkeite.

12. Bleach particle according to Claim 11,
**characterized in that**
the weight fraction of the additional coating layer is 2 to 25%, preferably 2 to 10%, based on the mass of the bleach particle.

13. Cleaner
comprising bleach particles according to any one of Claims 1 to 12.

14. Method of producing bleach particles according to Claim 1, comprising
a) spraying an aqueous solution comprising sodium sulfate onto particles consisting essentially of sodium percarbonate with simultaneous evaporation of water and
b) depositing an aqueous solution or dispersion of a water-soluble binder and particles of a bleach activator, selected from perhydrolyzable N-acyl compounds and O-acyl compounds, on the coated particles formed in step a).

15. Method according to Claim 14,
**characterized in that**
step b) is carried out in a fluidized bed with simultaneous evaporation of water.

16. Method according to Claim 14 or 15,
**characterized in that**,
in a further step c), an aqueous solution comprising sodium sulfate is sprayed onto the coated particles formed in step b) with simultaneous evaporation of water.

17. Method according to any one of Claims 14 to 16,
**characterized in that**,
after applying an outer coating layer in step b), drying is carried out at a temperature in the range from 60 to 95°C.

## Revendications

1. Particule d'agent de blanchiment, comprenant :
a) un noyau constitué essentiellement de percarbonate de sodium,
b) une couche d'enrobage intérieure, contenant au moins 50 % en poids de sulfate de sodium sous forme de thénardite ou de burkéite, et
c) une couche d'enrobage extérieure, contenant un agent liant hydrosoluble et au moins un activateur de blanchiment choisi parmi les composés N-acylés et les composés O-acylés perhydrolysables.

2. Particule d'agent de blanchiment selon la revendication 1, **caractérisée en ce que** le noyau est une particule de percarbonate de sodium pouvant être obtenue par granulation par structuration en lit fluidisé.

3. Particule d'agent de blanchiment selon la revendication 1 ou 2, **caractérisée en ce que** le noyau présente un diamètre situé dans la plage de 400 à 1600 µm.

4. Particule d'agent de blanchiment selon l'une des revendications 1 à 3, **caractérisée en ce que** la couche d'enrobage intérieure contient du sulfate de sodium et du carbonate de sodium en un rapport en poids de 95 : 5 à 75 : 25 et la proportion de sulfate de sodium et de carbonate de sodium dans la couche d'enrobage atteint au moins 80 % en poids.

5. Particule d'agent de blanchiment selon l'une des revendications 1 à 4, **caractérisée en ce que** la proportion en poids de la couche d'enrobage intérieure est de 2 à 25 %, de préférence 2 à 10 %, par rapport à la masse de la particule d'agent de blanchiment.

6. Particule d'agent de blanchiment selon l'une des revendications 1 à 5, **caractérisée en ce que** la couche d'enrobage extérieure contient l'activateur de blanchiment sous la forme de particules ayant une taille de particules moyenne située dans la plage de 0,1 à 400 µm.

7. Particule d'agent de blanchiment selon l'une des revendications 1 à 6, **caractérisée en ce que** l'activateur de blanchiment est la tétra-acétyléthylène diamine ou le sel sodique d'acide 4-nonanoyloxybenzènesulfonique.

8. Particule d'agent de blanchiment selon l'une des revendications 1 à 7, **caractérisée en ce que** l'agent liant est un silicate de métal alcalin hydrosoluble ou un polymère vinylique comprenant des groupes carboxyle.

9. Particule d'agent de blanchiment selon l'une des revendications 1 à 8, **caractérisée en ce que** le rapport en poids de l'activateur de blanchiment sur le percarbonate de sodium se situe dans la plage de 1 : 1 à 1 : 9, de préférence de 1 : 3 à 1 : 5.

10. Particule d'agent de blanchiment selon l'une des revendications 1 à 9, **caractérisée en ce que** le rapport en poids de l'activateur de blanchiment sur l'agent liant se situe dans la plage de 20 : 1 à 1 : 1.

11. Particule d'agent de blanchiment selon l'une des revendications 1 à 10, **caractérisée en ce qu'**elle présente une couche d'enrobage supplémentaire reposant sur la couche d'enrobage extérieure, qui contient au moins 50 % en poids de sulfate de sodium sous forme de thénardite ou de burkéite.

12. Particule d'agent de blanchiment selon la revendication 11, **caractérisée en ce que** la proportion en poids de la couche d'enrobage supplémentaire est de 2 à 25 %, de préférence de 2 à 10 %, par rapport à la masse de la particule d'agent de blanchiment.

13. Produit de nettoyage, comprenant des particules d'agent de blanchiment selon l'une des revendications 1 à 12.

14. Procédé de fabrication de particules d'agent de blanchiment selon la revendication 1, comprenant les étapes consistant à :
a) pulvériser une solution aqueuse contenant du sulfate de sodium sur des particules se composant essentiellement de percarbonate de sodium sous évaporation simultanée d'eau et
b) déposer une solution aqueuse ou une dispersion d'un liant hydrosoluble et de particules d'un activateur de blanchiment, choisi parmi les composés N-acylés et O-acylés perhydrolysables sur les particules enrobées formées à l'étape a).

15. Procédé selon la revendication 14, **caractérisé en ce que** l'étape b) est réalisée dans un lit fluidisé sous évaporation simultanée d'eau.

16. Procédé selon la revendication 14 ou 15, **caractérisé en ce que**, au cours d'une étape ultérieure c), une solution aqueuse contenant du sulfate de sodium est pulvérisée sur les particules enrobées formées à l'étape b) sous évaporation simultanée d'eau.

17. Procédé selon l'une des revendications 14 à 16, **caractérisé en ce que**, après dépôt d'une couche d'enrobage extérieure à l'étape b), un séchage est réalisé à une température située dans la plage de 60 à 95 °C.
